## Europäisches Patentamt

## European Patent Office

## Office européen des brevets

(19)

(11) Veröffentlichungsnummer: **0 228 475**
**B1**

(12) **EUROPÄISCHE PATENTSCHRIFT**

(45) Veröffentlichungstag der Patentschrift:
**15.03.89**

(51) Int. Cl.⁴: **H02P 8/00**, G05B 19/407

(21) Anmeldenummer: **85116441.8**

(22) Anmeldetag: **21.12.85**

(54) **Verfahren und Schaltungsanordnung zur Ansteuerung eines Schrittmotors.**

(43) Veröffentlichungstag der Anmeldung:
**15.07.87 Patentblatt 87/29**

(45) Bekanntmachung des Hinweises auf die Patenterteilung:
**15.03.89 Patentblatt 89/11**

(84) Benannte Vertragsstaaten:
**AT BE CH DE FR GB IT LI NL SE**

(56) Entgegenhaltungen:
**DE-A- 2 238 613**
**DE-A- 2 721 240**
**DE-A- 3 343 689**
**DE-B- 2 420 285**

**ELEKTRONIK, Band 31, Nr. 16, August 1982,**
**Seiten 35-38, München; W. KUNTZ "Mehrachsige,**
**schnelle Schrittmotorsteuerung mit beliebigem**
**Frequenz-Zeit-Profil"**

(73) Patentinhaber: **DR.-ING. RUDOLF HELL GmbH,**
**Grenzstrasse 1-5, D-2300 Kiel 14(DE)**

(72) Erfinder: **Dölves, Jürgen, Labooer-Weg 44 a,**
**D-2305 Heikendorf(DE)**

ACTORUM AG

## Beschreibung

Die Erfindung bezieht sich auf das Gebiet der Antriebs- und Steuertechnik für Schrittmotore und betrifft insbesondere die Erzeugung einer Motor-Taktfolge mit veränderbarer Frequenz zur Ansteuerung des Schrittmotors während der einzelnen Betriebsphasen.

Eine solche Schaltungsanordnung zur Ansteuerung eines Schrittmotors besteht üblicherweise aus einem Taktgeber, einer Steuerstufe und einem Motor-Verstärker. Der Taktgeber erzeugt die Motor-Taktfolge mit der gewünschten Motor-Frequenz. In der Steuerstufe werden aus der Motor-Taktfolge zyklisch mit der Motor-Frequenz aufeinanderfolgende Schaltimpulse abgeleitet. Der Motor-Verstärker weist eine Gleichspannungsquelle und von den Schaltimpulsen gesteuerte Schalter auf, die mit der Gleichspannungsquelle und den Statorwicklungen des Schrittmotors verbunden sind. Durch das zyklische Weiterschalten der Schalter mit der Motor-Frequenz wird das Drehfeld für den Rotor des Schrittmotors erzeugt, dessen Drehzahl oder Schrittzahl somit von der Motor-Frequenz abhängig ist.

Ein Schrittmotor hat eine von der angekoppelten Last abhängige Grenzfrequenz, bei der er nicht mehr ohne Schrittfehler durch alleiniges Einschalten der Motor-Taktfolge anläuft und durch Ausschalten der Motor-Taktfolge schrittgenau zum Stillstand kommt. Zur Vermeidung von Schrittfehlern, insbesondere bei höheren Schrittfrequenzen, wird der Schrittmotor daher in einer Hochlauf-Phase mit einer ansteigenden Motor-Frequenz von einer niedrigen Startfrequenz auf die gewünschte Arbeitsfrequenz in der Arbeits-Phase hochgezogen und danach durch Absenken der Motor-Frequenz in einer nachfolgenden Brems-Phase schrittgenau gestoppt.

Der Taktgeber muß daher eine Motor-Taktfolge liefern, deren Frequenz in der Hochlauf- und Brems-Phase zeitlich veränderbar und in der Arbeits-Phase konstant ist.

Zur Erzeugung einer Motor-Taktfolge mit einer zeitlich variablen Frequenz weisen herkömmliche Taktgeber z.B. Frequenz/Spannungs-Wandler auf, bei denen der zeitliche Frequenzverlauf von dem zeitlichen Verlauf einer Steuerspannung abhängig ist. Die Verwendung von Frequenz/Spannungs-Wandlern hat aber den Nachteil, daß der Verlauf der Steuerspannung durch Zeitglieder, z.B. durch Laden und Entladen von Kondensatoren, nachgebildet werden muß, was aufwendig ist, insbesondere dann, wenn unterschiedliche Frequenzverläufe zur Verfügung stehen müssen. Hinzu kommt, daß es relativ schwierig ist, die Steuerspannung in der Arbeits-Phase hinreichend konstant zu halten und in der Hochlauf- und Brems-Phase mit anderen Steuerparametern zu synchronisieren.

Eine andere Art der Erzeugung einer Motor-Taktfolge mit einer variablen Motor-Frequenz ist aus der DE-A 2 238 613 bekannt. Dort besteht der Taktgeber aus einem Taktgenerator, der eine Grund-Taktfolge mit konstanter Grund-Frequenz erzeugt und aus einer nachgeschalteten, aus einzelnen Flip-Flops aufgebauten Frequenzteiler-Stufe, in der die benötigte Motor-Frequenz durch Frequenzteilung aus der Grund-Frequenz der Grund-Taktfolge gewonnen wird. Die variable Motor-Frequenz wird dabei durch zeitliche Änderung des Teilungsfaktors, z.B. mit Hilfe von Zeitgliedern erzeugt.

Aus der DE-C 2 721 240 ist ein anderer Taktgeber mit Taktgenerator und Frequenzteiler-Stufe bekannt. Die erforderlichen Teilungsfaktoren werden dort als Datenwörter vorgegeben, die als Programmfolge in einem Festwertspeicher abgelegt und in Abhängigkeit der ausgeführten Schritte des Schrittmotors ausgegeben werden, um den Schrittmotor mit optimalem Lastwinkel zu betreiben.

Bei den bekannten Taktgebern mit herkömmlich aufgebauten Frequenzteiler-Stufen treten beim schrittweisen Umschalten der Frequenzteiler-Stufen störende Frequenzsprünge auf, die bei kleinen Teilungsfaktoren, d.h. bei hohen Motor-Frequenzen, besonders groß und damit störend sind. Da das Drehmoment des Schrittmotors mit steigender Motor-Frequenz auch noch abnimmt, wächst die Gefahr von Schrittfehlern oder des Außertrittfallens bei hohen Motor-Frequenzen.

Aus diesem Grunde sollten die Teilungsfaktoren für die höchsten Motor-Frequenzen möglichst groß sein, damit die störenden Frequenzsprünge klein bleiben.

Um diese Forderung mit herkömmlichen Frequenzteiler-Stufen erfüllen zu können, müßte eine Grund-Taktfolge mit einer sehr hohen Grund-Frequenz erzeugt werden, was nur mit hohem technischen Aufwand realisierbar ist.

Aus der Zeitschrift "Elektronik", Band 31, Nr. 16, Seiten 35 bis 38, ist es bereits bekannt, anstelle einer herkömmlichen Frequenzteiler-Stufe einen Rate-Multiplier zur Erzeugung einer zeitvariablen Motor-Frequenz zu verwenden. Indem Rate-Multiplier wird die Grund-Frequenz durch einen konstanten ersten Faktor dividiert und mit einem zeitvariablen zweiten Faktor multipliziert. Die Faktoren werden durch einen Mikroprozessor bereitgestellt. Zur Realisierung eines bestimmten zeitlichen Verlaufs der Motor-Frequenz muß der gewünschte Frequenz/Zeit-Verlauf tabellarisch erfaßt, die Tabelle in dem Arbeitsspeicher des Mikroprozessors abgelegt und ein Programm zur Abarbeitung der gespeicherten Tabelle in den einzelnen Betriebsphasen des Schrittmotors erstellt werden.

Durch die Verwendung des Rate-Multipliers werden zwar die störenden Frequenzsprünge reduziert, die bekannte Lösung hat aber den Nachteil, daß sich der Frequenz/Zeit-Verlauf nicht auf einfache Weise jeweils optimal an die Eigenschaften des Schrittmotors und an die an den Schrittmotor angekoppelte Last anpassen läßt, wodurch der Betrieb des Schrittmotors ohne Schrittfehler erst gewährleistet ist.

Zur Ermittlung des optimalen Frequenz/Zeit-Verlaufs müssen bei der bekannten Lösung nämlich erst praktische Messungen an dem Schrittmotor-Antrieb vorgenommen werden, bevor die Tabelle erstellt und gespeichert werden kann. Gewünschte Korrekturen des Verlaufs machen außerdem das Löschen der gespeicherten Tabelle und entsprechende Programmänderungen erforderlich.

Der in den Ansprüchen 1 und 12 angegebenen Erfindung liegt daher die Aufgabe zugrunde, eine Verfahren und eine Schaltungsanordnung zur Ansteuerung eines Schrittmotors anzugeben, mit denen die prinzipiell unvermeidbaren Frequenzsprünge über den gesamten Bereich der Motor-Frequenz kleingehalten werden und mit denen sich der zeitliche Verlauf der Motor-Frequenz auf einfache Weise jeweils an die Eigenschaften des Schrittmotors und an die an den Schrittmotor angekoppelte Last anpassen läßt, so daß ein sicherer Hochlauf und eine sichere Abbremsung des Schrittmotors ohne Schrittfehler gewährleistet sind.

Die Erfindung wird im folgenden anhand der Figuren 1 bis 5 näher erläutert. Es zeigen:

Fig. 1: eine Ansteuer-Schaltung für einen Schrittmotor nach dem Stand der Technik;

Fig. 2: den Aufbau einer Frequenzuntersetzer-Stufe;

Fig. 3: den Verlauf der Motor-Frequenz in den einzelnen Betriebsphasen des Schrittmotors;

Fig. 4 eine grafische Darstellung einer Frequenzrampe; und

Fig. 5 eine weitere Darstellung einer Frequenzrampe.

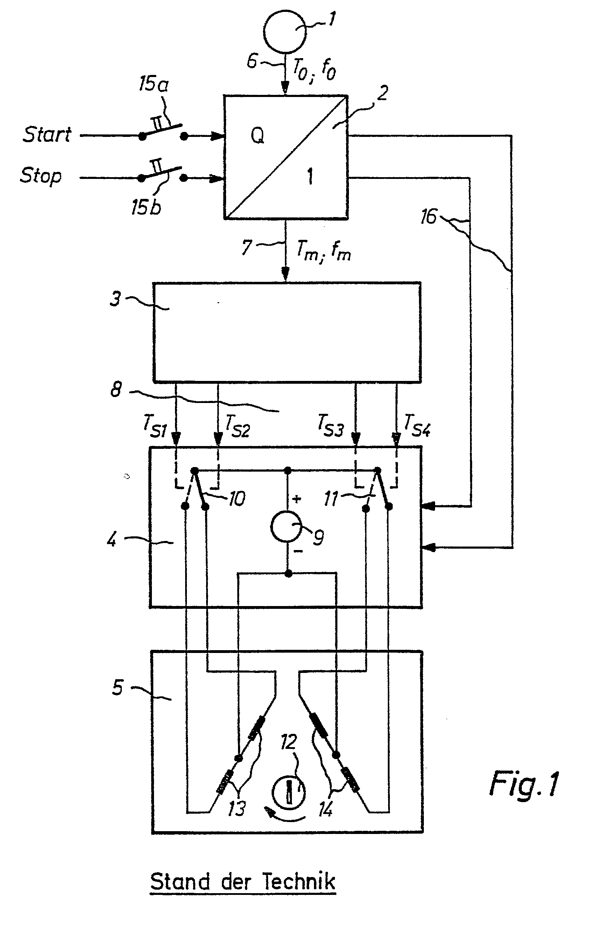

Fig. 1 zeigt den schematischen Aufbau einer Schaltungsanordnung zur Ansteuerung eines Schrittmotors nach dem Stand der Technik. Die Schaltungsanordnung besteht aus einem Taktgenerator 1, einer Frequenzuntersetzer-Stufe 2, einer Motor-Steuerstufe 3, einem Motor-Verstärker 4 und einem Schrittmotor 5. Der Taktgenerator 1 gibt eine Grund-Taktfolge $T_0$ mit einer konstanten Grund-Frequenz $f_0$ b, die der Frequenzuntersetzer-Stufe 2 über eine Leitung 6 zugeführt wird. In der Frequenzuntersetzer-Stufe 2 wird aus der Grund-Taktfolge $T_0$ mit der konstanten Grund-Frequenz $f_0$ durch Frequenzteilung eine Motor-Taktfolge $T_m$ mit einer Motor-Frequenz $f_m$ erzeugt, die über eine Leitung 7 an die Motor-Steuerstufe 3 gelangt. In der Motor-Steuerstufe 3 werden, z.B. mit Hilfe von Ringzählern, aus der Motor-Taktfolge $T_m$ mit der Motor-Frequenz $f_m$ zyklisch aufeinanderfolgende Schaltimpulse $T_{s1}$ bis $T_{s4}$ gewonnen, die über Leitungen 8 dem Motor-Verstärker 4 zugeführt werden. Der Motor-Verstärker 4 besteht aus einer ein- und ausschaltbaren Gleichspannungsquelle 9 zur Erzeugung der Motorströme und aus elektronischen Schaltern 10 und 11, die von den Schaltimpulsen $T_{s1}$ bis $T_{s4}$ betätigt werden. Der Schrittmotor 5 besteht aus einem Rotor 12 und einem Stator, an dessen Umfang Statorwicklungen 13 und 14 verteilt sind. Der Rotor 12 besteht aus Permanentmagneten, die zu Polpaaren ausgebildet sind. Die Schalter 10 und 11 sind mit der Gleichspannungsquelle 9 sowie mit den Statorwicklungen 13 und 14 des Schrittmotors 5 verbunden. Die Schalter 10 und 11 werden durch die Schaltimpulse $T_{s1}$ bis $T_{s4}$ zyklisch mit der Motor-Frequenz $f_m$ umgeschaltet, um das Drehfeld für den Rotor 12 des Schrittmotors 5 zu erzeugen. Dabei ist die Drehzahl des Rotors 12 bzw. des Schrittmotors 5 von der Motor-Frequenz $f_m$ sowie von der Anzahl der Polpaare des Schrittmotors 5 abhängig.

Ein Start-Befehl zu Beginn der Hochlauf-Phase des Schrittmotors 5 und ein Stopp-Befehl zu Beginn seiner Brems-Phase werden von einem Bediener mit Hilfe von Tasten 15a und 15b an die Frequenzuntersetzer-Stufe 2 gegeben. In der Frequenzuntersetzer-Stufe 2 werden entsprechende Steuerbefehle erzeugt, die dem Motor-Verstärker 4 über Leitungen 16 zugeführt werden und dort die Gleichspannungsquelle 9 entsprechend ein- und ausschalten, was nicht näher dargestellt ist.

Zum detaillierteren Aufbau und zur Wirkungsweise von Motor-Steuer-Stufe 3, Motor-Verstärker 4 und Schrittmotor 5 wird auf den Artikel "Positionierungen für Schrittmotoren" in der Zeitschrift "Elektronik", 55, Heft 7 vom 5.4.1973, Seiten 18–22, verwiesen, da diese Baugruppen nicht Gegenstand der Erfindung und außerdem dem Fachmann hinlänglich bekannt sind.

Gegenstand der Erfindung ist die Erzeugung einer Motor-Taktfolge $T_m$ mit einer zeitabhängigen Motor-Frequenz $f_m(t)$, auch Frequenzrampe genannt, zur Steuerung des Schrittmotors 5 in den einzelnen Betriebs-Phasen. Dazu wird eine ansteigende Motor-Frequenz in der Hochlauf-Phase, eine konstante Motor-Frequenz in der Arbeits-Phase und eine abfallende Motor-Frequenz in der Brems-Phase benötigt.

Diese Motor-Taktfolge $T_m$ mit der zeitabhängigen Motor-Frequenz $f_m(t)$ wird in der Freqeunzuntersetzer-Stufe 2 gewonnen.

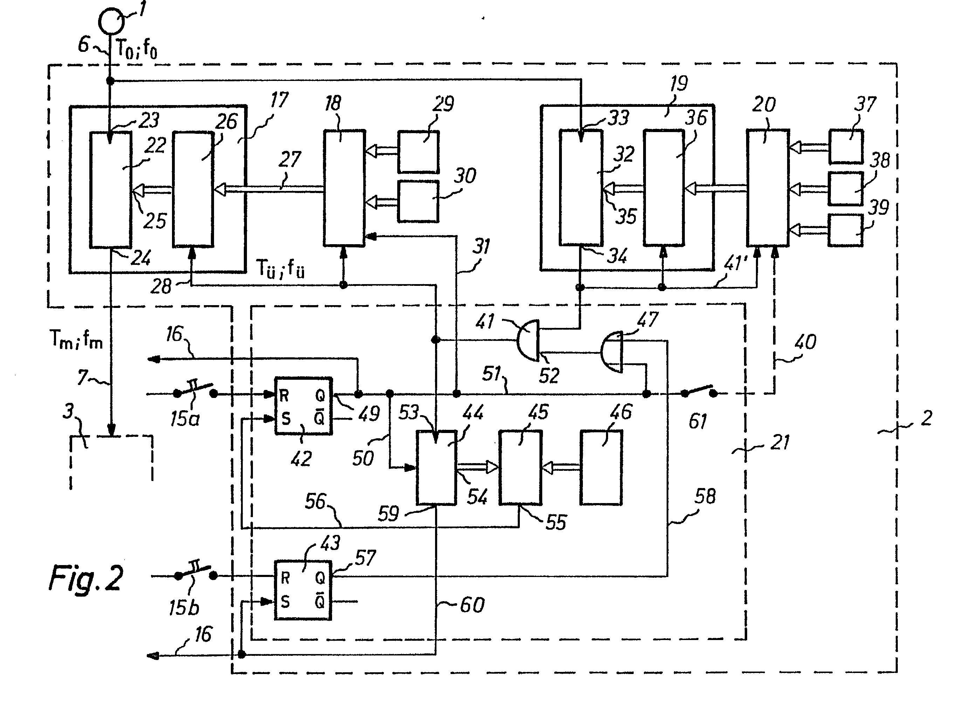

Fig. 2 zeigt den Aufbau der erfindungsgemäßen Frequenzuntersetzer-Stufe 2, die aus einer Haupt-Frequenzteiler-Stufe 17, einer Akkumulator-Stufe 18, einer Hilfs-Frequenzteiler-Stufe 19, einer weiteren Akkumulator-Stufe 20 sowie aus einer Steuer-Stufe 21 besteht.

Aufbau und Wirkungsweise der einzelnen Stufen sollen nachfolgend näher erläutert werden.

Die Haupt-Frequenzteiler-Stufe 17 besteht aus einem Frequenzuntersetzer 22 mit einem Eingang 23, einem Ausgang 24 und einem Programmier-Eingang 25 sowie aus einem an den Programmier-Eingang 25 angeschlossenen Speicherregister 26.

Der Frequenzuntersetzer 22 ist erfindungsgemäß so aufgebaut, daß die Ausgangsfrequenz $f_{aus}$ am Ausgang 24 durch Multiplikation der dem Eingang 23 zugeführten Eingangsfrequenz $f_{ein}$ mit einem Multiplikationsfaktor $q_m$ gemäß Gleichung (1) gebildet wird.

$$f_{aus} = f_{ein} \cdot q_m \quad (1)$$

Der Multiplikationsfaktor $q_m$ ist in dem Speicherregister 26 abgelegt und wird dem Programmier-Eingang 25 des Frequenzuntersetzers 22 über einen Daten-Bus 27 zugeführt. Der Frequenzuntersetzer 22 besteht vorzugsweise aus einem 6-Bit-Binary Rate Multiplier vom Typ SN 7497 der Firma Texas Instruments. Diese und alle folgenden Bausteine sind im Handel erhältlich und dem Fachmann bekannt, so daß sich eine detaillierte Beschreibung des Aufbaus und der Wirkungsweise erübrigt.

Der Baustein vom Typ SN 7497 hat zusätzlich einen internen, konstanten Teilungsfaktor $q_k$, so daß zwischen der Ausgangsfrequenz $f_{aus}$, der Eingangsfrequenz $f_{ein}$, dem internen Teilungsfaktor $q_k$ und dem Multiplikationsfaktor $q_m$ die Beziehung gemäß Gleichung (2) gilt, wobei $0 \leqq q_m \leqq q_k$ ist.

$$f_{aus} = f_{ein} \frac{q_m}{q_k} \qquad (2)$$

Der Multipikationsfaktor $q_m$ ist als 6-Bit-Datenwort vorgebbar, so daß mit einem Baustein Multiplikationsfaktoren von 0 bis 63 realisiert werden können. Um größere Multiplikationsfaktoren zu erhalten, wird eine entsprechende Anzahl solcher Bausteine in Kaskade geschaltet. Selbstverständlich kann der Frequenzuntersetzer 22 auch aus einzelnen käuflichen Bauteilen aufgebaut werden.

Die Grund-Taktfolge $T_0$ mit der Grund-Frequenz $f_0$ wird dem Eingang 23 des Frequenzuntersetzers 22 von dem Taktgenerator 1 über die Leitung 6 zugeführt, und am Ausgang 24 entsteht die Motor-Taktfolge $T_m$ mit der Motor-Frequenz $f_m$, die der nur gestrichelt angedeuteten Motor-Steuerstufe 3 über die Leitung 7 zugeführt wird.

Das Frequenzniveau, auf dem die Frequenzteilung im Frequenzuntersetzer 22 zwischen der Grund-Frequenz $f_0$ und der Motor-Frequenz $f_m$ stattfindet, kann frei gewählt und damit den Erfordernissen angepaßt werden, indem zusätzliche Frequenzteiler zwischen Taktgenerator 1 und Frequenzuntersetzer-Stufe 2 und/oder zwischen Frequenzuntersetzer-Stufe 2 und Motor-Steuerstufe 3 geschaltet werden.

Aus Gleichung (2) ergibt sich mit $f_{ein} = f_0$, $f_{aus} = f_m(t)$ und mit $q_m$ als zeitabhängiger Multiplikationsfaktor $q_m(t)$:

$$f_m(t) = \frac{f_0}{q_k} \cdot q_m(t) \qquad (3)$$

und mit $f_0/q_k = f'_0$

$$f_m(t) = f'_0 \cdot q_m(t) \qquad (4)$$

Nach Gleichung (4) ist die Motor-Frequenz $f_m(t)$ direkt dem Multiplikationsfaktor $q_m(t)$ proportional, so daß in der Hochlauf-Phase ein ansteigender Multiplikationsfaktor $q_m(t)$, in der Arbeits-Phase ein der Arbeits-Motor-Frequenz entsprechender konstanter Multiplikationsfaktor $q_{ma}$ und in der Brems-Phase ein abfallender Multiplikationsfaktor $q_m(t)$ bereitgestellt werden muß.

Die entsprechenden Multiplikationsfaktoren $q_m(t)$ werden in der Akkumulator-Stufe 18 erzeugt und jeweils mit den Takten n einer Übernahme-Taktfolge $T_ü$ der Übernahme-Frequenz $f_ü$ über den Daten-BUS 27 in das Speicherregister 26 der Haupt-Frequenzteiler-Stufe 17 übernommen. Die Übernahme-Taktfolge $T_ü$ wird dem Speicherregister 26 und der Akkumulator-Stufe 18 zur Synchronisierung über eine Leitung 28 zugeführt.

Die Taktzeitpunkte $t_n$ der Übernahme-Taktfolge $T_ü$ bestimmen somit die Zeitpunkte, zu denen sich der Multiplikationsfaktor $q_m(t)$ und damit die Motor-Frequenz $f_m(t)$ ändert.

Die Multiplikationsfaktoren $q_m(t)$ werden in den einzelnen Betriebs-Phasen des Schrittmotors 5 gemäß Gleichungen (5) gebildet.

In der Hochlauf-Phase: $q_m(t) = q_{m0} + n \cdot \Delta q_m$ (5a)

In der Arbeits-Phase: $q_m(t) = q_{ma} = $ konst. (5b)

In der Brems-Phase: $q_m(t) = q_{ma} - n \cdot \Delta q_m$ (5c)

In Gleichungen (5) ist "$q_{m0}$" ein vorgebbarer konstanter Anteil, der, wie noch gezeigt wird, die Start-Motor-Frequenz $f_{m0}$ in der Hochlauf-Phase bestimmt, und "$n \Delta q_m$" ein von der Zeit abhängiger Anteil. "$\Delta q_m$" stellt einen vorgebbaren Änderungsbetrag des Multiplikationsfaktors $q_m(t)$ im Zeitintervall $\Delta t$ zwischen zwei aufeinanderfolgenden Takten n der Übernahme-Taktfolge $T_ü$ dar, der, wie ebenfalls noch gezeigt wird, die Steigung der Freqeunzrampe $f_m(t)$ bestimmt. Die Parameter "$q_{m0}$" und "$\Delta q_m$" werden digital über Codier-Schalter 29 und 30 in die Akkumulator-Stufe 18 eingegeben, während die Akkumulator-Stufe 18 über eine Steuerleitung 31 auf Addition (Gleichung 5a) oder auf Subtraktion (Gleichung 5c) umgeschaltet wird. Anstelle der Codier-Schalter zur manuellen Eingabe der Parameter kann auch ein Rechner treten, der die benötigten Parameter nach den geforderten Betriebsbedingungen für den Schrittmotor 5 berechnet.

Die Übernahme-Taktfolge $T_\ddot{u}$ wird durch eine herkömmliche Frequenzteilung mit dem Teilungsfaktor $q_\ddot{u}$ aus der Grund-Taktfolge $T_0$ in der Hilfs-Frequenzuntersetzer-Stufe 19 abgeleitet.

Die Hilfs-Frequenzuntersetzer-Stufe 19 besteht aus einem normalen Frequenzteiler 32, z. B. vom Typ SN 7493, mit einem Eingang 33, einem Ausgang 34 und einem Programmier-Eingang 35 für den Teilungsfaktor $q_\ddot{u}$ sowie aus einem an den Programmier-Eingang 35 angeschlossenen Speicherregister 36, z. B. vom Typ SN 74174.

Die Grund-Taktfolge $T_0$ wird dem Eingang 33 des Frequenzteilers 32 vom Taktgenerator 1 über die Leitung 6 zugeführt, und am Ausgang 34 entsteht die Übernahme-Taktfolge $T_\ddot{u}$ mit der Übernahme-Frequenz $f_\ddot{u}$, wobei die Beziehung (6) gilt.

$$f_\ddot{u} = \frac{f_0}{q_\ddot{u}} \qquad\qquad (6)$$

Die Übernahme-Frequenz $f_\ddot{u}$ kann konstant ($q_\ddot{u}$ = konst.) oder aber mit der Zeit ansteigend oder abfallend ($q_\ddot{u}$ zeitabhängig) erzeugt werden, um, wie ebenfalls noch gezeigt wird, unterschiedliche Verläufe der Frequenzrampe $f_m(t)$ zu erzeugen.

Die Teilungsfaktoren $q_\ddot{u}$ werden gemäß Gleichungen (7) in der Akkumulator-Stufe 20 gebildet.

Für eine zeitabhängige Übernahme-Frequenz:

$q_\ddot{u}(t) = q_{\ddot{u}o} \pm n\Delta q_\ddot{u}$ (7a)

Für eine konstante Übernahme-Frequenz:

$q_\ddot{u} = q_{\ddot{u}o}$ = konst. (7b)

Die Größen "$q_{\ddot{u}o}$" und "$\Delta q_\ddot{u}$" werden über Codier-Schalter 37 und 38 und der Befehl zur Addition oder zur Subtraktion über einen weiteren Codier-Schalter 39 in die Akkumulator-Stufe 20 eingegeben. Die Akkumulator-Stufe 18 kann aber auch durch einen entsprechenden Steuerbefehl von der Steuer-Stufe 21 über eine Steuerleitung 40 von Addition auf Subtraktion oder umgekehrt umgeschaltet werden.

Die Akkumulator-Stufe 20 wird von der Übernahme-Taktfolge $T_\ddot{u}$ auf einer Leitung 41' synchronisiert. Die in der Akkumulator-Stufe 20 erzeugten Teilungsfaktoren $q_\ddot{u}(t)$ werden jeweils von den Takten der Übernahme-Takfolge $T_\ddot{u}$ auf der Leitung 41' in das Speicherregister 36 übernommen. Für den Fall, daß ein konstanter Teilungsfaktor $q_\ddot{u}$ und damit eine konstante Übernahme-Frequenz $f_\ddot{u}$ erzeugt werden soll, wird die Akkumulator-Stufe 20 stillgesetzt. Die Akkumulator-Stufen 18 und 20 sind vorzugsweise aus Bausteinen vom Typ SN 545482 aufgebaut.

Zwischen der Motor-Frequenz $f_m(t)$, dem Multiplikationsfaktor $q_m(t)$ und der Übernahme-Frequenz $f_\ddot{u}$ bzw. dem Teilungsfaktor $q_\ddot{u}$ ergeben sich für die Betriebs-Phasen des Schrittmotors 5 folgende Beziehungen, wobei zwischen einem konstanten $q_\ddot{u}$ und einem zeitabhängigen $q_\ddot{u}(t)$ unterschieden wird.

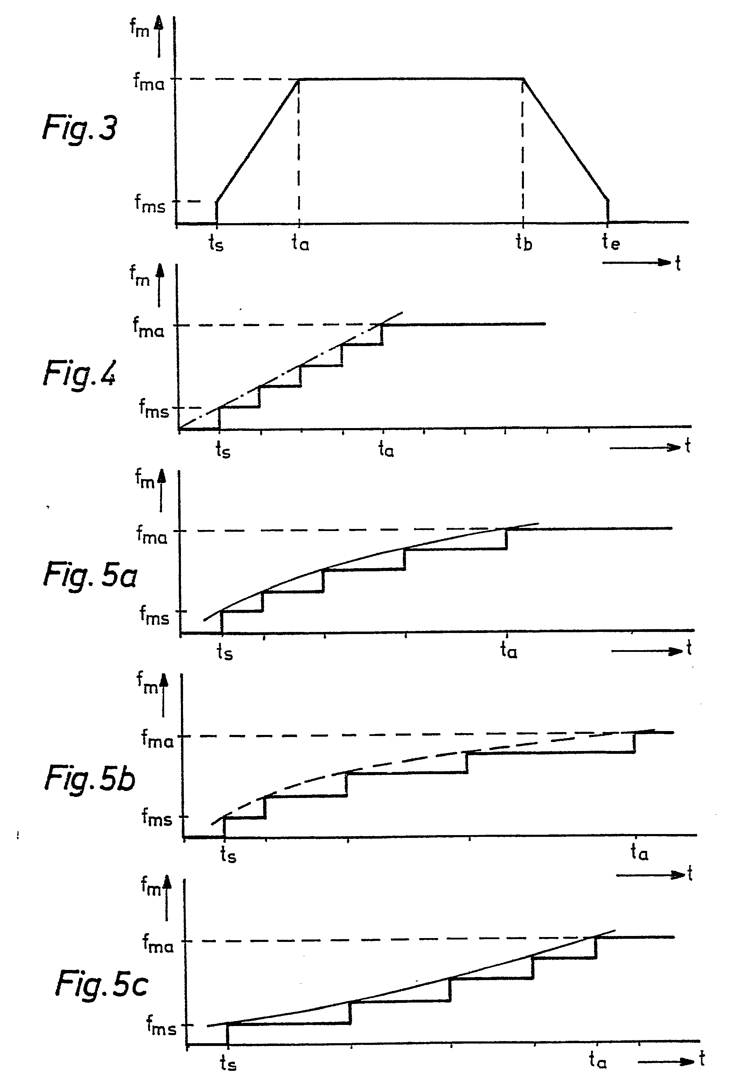

Dazu zeigt zunächst die Fig. 3 den typischen Verlauf der Motor-Frequenz $f_m(t)$ in den einzelnen Betriebs-Phasen des Schrittmotors 5, wobei eine lineare Frequenzänderung oder Frequenzrampe angenommen wird. Zum Zeitpunkt $t_s$ wird der Startbefehl zum Hochlauf des Schrittmotors 5 gegeben. Die Hochlauf-Phase ist durch das Zeitintervall $t_s$ bis $t_a$ gekennzeichnet, in der die Motor-Frequenz $f_m$ linear bis zu der der gewünschten Drehzahl des Schrittmotors 5 entsprechenden Arbeitsfrequenz $f_{ma}$ ansteigt. In der Arbeits-Phase des Schrittmotors 5 im Zeitintervall $t_a$ bis $t_b$ ist die Arbeitsfrequenz $f_{ma}$ konstant. Zum Zeitpunkt $t_b$ wird dann der Stoppbefehl gegeben, und es schließt sich die Brems-Phase im Zeitintervall $t_b$ bis $t_e$ an, in der der Schrittmotor durch eine linear abfallende Motor-Frequenz $f_m$ bis zum Stillstand im Zeitpunkt $t_e$ abgebremst wird.

### Hochlauf-Phase $t_s$ bis $t_a$

In der Hochlauf-Phase steigt der Multiplikationsfaktor $q_m(t)$ gemäß Gleichung (5a) zu den einzelnen Taktzeiten $t_n$ der Übernahme-Taktfolge $T_\ddot{u}$ wie folgt an:

$$\text{Zeitpunkt } t_0 \qquad q_{m0} = q_{m0}$$

$$\text{Zeitpunkt } t_1 \qquad q_{m1} = q_{m0} + \Delta q_m$$

$$\text{Zeitpunkt } t_2 \qquad q_{m2} = q_{m0} + 2\Delta q_m = q_{m1} + \Delta q_m \qquad (8)$$

$$\text{Zeitpunkt } t_n \qquad q_{mn} = q_{m0} + n\Delta q_m = q_{m(n-1)} + \Delta q_m$$

Die Motor-Frequenz $f_{mn}$ ist dann nach Gleichung (3) allgemein:

$$f_{mn} = f'_0 \, (q_{m0} + n\Delta q_m) \quad (9)$$

Aus Gleichung (4) ergibt sich die Start-Motor-Frequenz $f_{ms}$ zum Zeitpunkt $t_s = t_0$ des Hochlauf-Beginns zu:

$$f_{ms} = f'_0 \cdot q_{m0} \quad (10)$$

Die Start-Motor-Frequenz $f_{ms}$ läßt sich somit durch den Anteil "$q_{m0}$" vorgeben, der an dem Codier-Schalter 29 eingestellt wird.

Zum Zeitpumkt $t_a$ des Hochlauf-Endes ist dann die Motor-Frequenz gleich der Arbeits-Motor-Frequenz $f_{ma}$:

$$f_{ma} = f'_0 \cdot q_{ma} \text{ mit}$$
$$q_{ma} = q_{m0} + n\Delta q_m \quad (11)$$

Der Verlauf der Motor-Frequenz $f_m(t)$ zwischen der Start-Motor-Frequenz $f_{ms}$ und der Arbeits-Motor-Frequenz $f_{ma}$ kann linear oder gekrümmt sein.

<u>Fall a) Lineare Frequenzrampe $f_m(t)$</u>

Der Teilungsfaktor $q_{\ddot{u}} = q_{\ddot{u}o}$ ist konstant ($n\Delta q_{\ddot{u}} = 0$) und damit auch die Übernahme-Frequenz $f_{\ddot{u}}$. Die Takte der Übernahme-Taktfolge $T_{\ddot{u}}$ sind äquidistant ($\Delta t = \text{konst.}$)

Die Frequenzänderung $\Delta f_m$ zwischen zwei Takten der Übernahme-Taktfolge $T_{\ddot{u}}$ im Zeitintervall $\Delta t$ ist dann:

$$\Delta f_m = f'_0 \, \Delta q_m = \text{konst.} \quad (12)$$

und die Steigung S bzw. der Gradient der Frequenzänderung ist:

$$S = \frac{\Delta f_m}{\Delta t} = \frac{\Delta q_m \cdot f'_0}{\Delta t} = \text{konst.} \qquad (13)$$

Mit einem konstanten Teilungsfaktor $q_{\ddot{u}}$ für die Übernahme-Taktfolge $T_{\ddot{u}}$ wird somit eine mit der Zeit linear ansteigende Motor-Frequenz $f_m$ erzeugt, wobei die Steilheit S gemäß Gleichung (13) durch die Größe "$\Delta q_m$", die an dem Codier-Schalter 30 einstellbar ist, und/oder durch Änderung des Zeitintervalls $\Delta t$ mit Hilfe des Teilungsfaktors $q_{\ddot{u}}$ vorgegeben wird.

Fig. 4 zeigt in einer grafischen Darstellung den linear ansteigenden Verlauf der Motor-Frequenz $f_m$ (lineare Frequenzrampe) in der Hochlauf-Phase vom Start-Zeitpunkt $t_s$ bis zum Zeitpunkt $t_a$, in dem die Arbeits-Phase beginnt.

<u>Fall b) Gekrümmte Frequenzrampe $f_m(t)$</u>

Der Teilungsfaktor $q_{\ddot{u}}$ ist gemäß Gleichung (4) zeitabhängig ($n\Delta q_{\ddot{u}} \neq 0$) und damit auch die Übernahme-Frequenz $f_{\ddot{u}}$.

Die Takte der Übernahme-Taktfolge $T_{ü}$ sind nicht mehr äquidistant.

In diesem Fall sind die Zeitdifferenz $\Delta t$ zwischen zwei Takten der Übernahme-Taktfolge $T_{ü}$ und die Steilheit $S_n$ der Motor-Frequenz-Änderung nicht mehr konstant, sondern ändern sich mit der Zeit nach Gleichungen (14) und (15).

$$\Delta t = q_{ü0} + (n-1) \Delta q_{ü} \qquad (14)$$

$$S_n = \frac{f_0'^2 \cdot \Delta q_m}{q_{ü0} \pm (n-1)\Delta q_{ü}} \qquad (15)$$

Aus Gleichung (15) ergibt sich dann die Anfangs-Steilheit $S_1$ zum Zeitpunkt $t_1$ und die End-Steilheit $S_{n+1}$ zum Zeitpunkt $t_{n+1}$:

$$S_1 = \frac{f_0'^2 \Delta q_m}{q_{ü0}} \qquad (16)$$

$$S_{n+1} = \frac{f_0'^2 \cdot \Delta q_m}{q_{ü0} \pm n \Delta q_{ü}} \qquad (17)$$

Mit Hilfe eines zeitabhängigen Teilungsfaktors $q_{ü}(t)$ läßt sich somit ein gekrümmter Verlauf der Motor-Frequenz $f_m(t)$ bzw. eine gekrümmte Frequenzrampe erzielen, wobei die Größe $\Delta q_{ü}$ den Verlauf der Krümmung bestimmt. Dazu zeigen die grafischen Darstellungen in Fig. 5 verschiedene Beispiele. In Fig. 5a ist eine gekrümmte Frequenzrampe $f_m(t)$ dargestellt, deren Steilheit durch Wahl eines kleinen positiven Wertes $\Delta q_{ü}$ langsam abnimmt, während die Steilheit der Frequenzrampe $f_m(t)$ nach Fig. 5b durch Wahl eines großen positiven Wertes $\Delta q_{ü}$ schnell abnimmt.

Wird dagegen ein negativer Wert $\Delta q_{ü}$ gewählt, so wird nach Fig. 5c eine Frequenzrampe $f_m(t)$ erzeugt, deren Steilheit mit der Zeit größer wird.

Auf diese Art und Weise läßt sich durch zweckmäßige Wahl der verschiedenen Parameter der Verlauf der Rampenfunktion $f_m(t)$ in weiten Grenzen variieren und somit in vorteilhafter Weise optimal an die Eigenschaften des Schrittmotors und/oder der angekoppelten Last anpassen.

Arbeits-Phase $t_a$ bis $t_b$

In der Arbeits-Phase wird die bei Hochlauf-Ende zum Zeitpunkt $t_a$ erreichte Arbeits-Motor-Frequenz $f_{ma}$ bis zum Brems-Beginn zum Zeitpunkt $t_b$ durch einen konstanten Multiplikationsfaktor $q_{ma}$ nach Gleichungen (4) und (5b) konstant gehalten

$$f_{ma} = f_0' \cdot q_{ma} \qquad (18)$$

Brems-Phase $t_b$ bis $t_e$

In der Brems-Phase nimmt der Multiplikationsfaktor $q_m(t)$ ausgehend vom Multipliktionsfaktor $q_{ma}$ zu den einzelnen Taktzeiten $t'_n$ der Übernahme-Taktfolge $T_{ü}$ gemäß Gleichung (5c) wie folgt ab:

$$\text{Zeitpunkt } t'_0 \qquad q_{m0} = q_{ma}$$

$$\text{Zeitpunkt } t'_1 \qquad q_{m1} = q_{ma} - \Delta q_m \qquad (19)$$

$$\text{Zeitpunkt } t'_2 \qquad q_{m2} = q_{ma} - 2\Delta q_m \qquad \text{usw.}$$

$$\text{Zeitpunkt } t'_n \qquad q_{mn} = q_{ma} - n\Delta q_n$$

und die Motor-Frequenz $f_m(t)$ nimmt dann entsprechend Gleichung (4) ab, bis der Schrittmotor 5 zum Zeitpunkt $t_e$ zum Stillstand gekommen ist.

$$f_{mn} = f'_0 (q_{ma} - n\Delta q_m) \quad (20)$$

Nachdem die Erzeugung der Motor-Taktfolge $T_m$ mit variabler Motorfrequenz $f_m$ erklärt ist, soll nachfolgend die Steuerung des Schrittmotors 5 in den einzelnen Betriebs-Phasen durch die Steuer-Stufe 21 näher erläutert werden.

Die Steuer-Stufe 21 besteht im wesentlichen aus einem UND-Tor 41, Schalt-Flipflops 42 und 43, einem Vorwärts-/Rückwärts-Zähler 44, einem Vergleicher 45, einem Codier-Schalter 46 und einem ODER-Tor 47.

Vor Inbetriebnahme des Schrittmotors 5 werden zunächst die erforderlichen Parameter an den Codier-Schaltern 29, 30, 37 und 38 "$q_{m0}$", "$\Delta q_m$", "$q_{ü0}$" und "$\Delta q_ü$" und am Codier-Schalter 39 das entsprechende Vorzeichen eingestellt und in die Akkumulator Stufen 18 und 20 eingegeben. Außerdem wird an dem Codier-Schalter 46 in der Steuer-Stufe 21 die für den Hochlauf des Schrittmotors 5 auf die Arbeits-Motor-Frequenz $f_{ma}$ erforderliche Anzahl von Takten der Übernahme-Taktfolge $T_ü$ voreingestellt. Diese Anzahl n von Takten ergibt sich als Quotient aus der Differenz zwischen der Arbeits-Motor-Frequenz $f_{ma}$ und der Startfrequenz $f_{ms}$ und der eingestellten Frequenzänderung $\Delta f_m$ pro Übernahme-Takt, wobei $n \cdot \Delta f_m$ ein Maß für die momentan erreichte Motor-Frequenz ist. Während der einzelnen Betriebs-Phasen des Schrittmotors 5 ist die Wirkungsweise der Steuer-Stufe 21 gemäß der grafischen Darstellung in Fig. 3 folgende:

Hochlauf-Phase

Zur Einleitung der Hochlauf-Phase wird die Start-Taste 15a gedrückt, wodurch der Q-Ausgang 49 des Schalt-Flipflops 42 auf H-Pegel als Steuerbefehl "Hochlauf-Beginn" gesetzt wird. Dieser Steuerbefehl "Hochlauf-Beginn" löst verschiedene Vorgänge aus. Über die Steuerleitung 31 wird die Akkumulator-Stufe 18 auf "Hochlauf", d. h. auf Additions-Betrieb gemäß Gleichung (5a) umgeschaltet. Über eine Steuerleitung 50 wird der Vorwärts/Rückwärts-Zähler 44 vom Steuerbefehl auf Vorwärts-Zählbetrieb umgeschaltet. Gleichzeitig wird der Seuerbefehl "Hochlauf-Beginn" über eine Steuerleitung 51 und das ODER-Tor 47 an einen Eingang 52 des UND-Tores 41 gegeben, wodurch dieses geöffnet und die Übernahme-Taktfolge $T_ü$ durchgeschaltet wird.

Außerdem wird über die Steuerleitung 16 die in Fig. 1 gezeigte Motor-Steuerstufe 4 gestartet.

Die durch das UND-Tor 41 freigegebene Übernahme-Taktfolge $T_ü$ steuert nun die Übergabe der in der Akkumulator-Stufe 18 gemäß Gleichung (5a) erzeugten Teilungsfaktoren $q_m$ in das Speicherregister 26 der Haupt-Frequenzteiler-Stufe 17. Gleichzeitig wird die freigegebene Übernahme-Taktfolge $T_ü$ zur Feststellung der momentan erreichten Motor-Frequenz $n \cdot \Delta f_m$ nach dem Startzeitpunkt $t_s$ über einen Takt-Eingang 53 in den Vorwärts/Rückwärts-Zähler 44 eingezählt. Die aktuelle Anzahl der in den Vorwärts/Rückwärts-Zähler 44 eingezählten Takte wird laufend mit der am Codier-Schalter 46 voreingestellten Anzahl verglichen, wozu der Vergleicher 45 mit den Daten-Ausgängen 54 des Vorwärts/Rückwärts-Zählers 44 und mit dem Codier-Schalter 46 verbunden ist. Bei Gleichheit am Ende der Hochlauf-Phase zum Zeitpunkt $t_b$, zu dem die Arbeits-Motor-Frequenz $f_{ma}$ erreicht ist, gibt der Vergleicher 45 an einem Signal-Ausgang 55 einen Steuerbefehl "Hochlauf-Ende" ab, der das Schalt-Flipflop 42 über eine Leitung 56 zurücksetzt. Der Q-Ausgang 49 des Schalt-Flipflops 42 nimmt L-Pegel an, was einem Steuerbefehl "Hochlauf-Ende" entspricht. Dieser Steuerbefehl "Hochlauf-Ende" schaltet über die Leitung 51, das ODER-Tor 47 und den Eingang 52 das UND-Tor 41 aus. Dadurch wird die Übernahme-Taktfolge $T_ü$ abgeschaltet, die Übergabe neuer Multiplikationsfaktoren $q_m$ in das Speicherregister 26 gestoppt und damit der Multiplikationsfaktor $q_{ma}$ gemäß Gleichung (5b) für die Dauer der Arbeits-Phase des Schrittmotors 5 konstant gehalten. Durch das Abschalten der Übernahme-Taktfolge $T_ü$ wird außerdem der Zählerstand im Vorwärts/Rückwärts-Zähler 44 für die Dauer der Arbeits-Phase eingefroren. Der Steuerbefehl "Hochlauf-Ende" schaltet außerdem in Vorbereitung auf die Brems-Phase über die Leitung 31 die Akkumulator-Stufe 18 gemäß Gleichung (5c) auf Subtraktions-Betrieb und über die Leitung 50 den Vorwärts-Rückwärts-Zähler auf Rückwärts-Zählbetrieb um.

Brems-Phase

Zur Einleitung der Brems-Phase (Zeitpunkt $t_b$) wird die Stop-Taste 15b gedrückt und das Schalt-Flipflop 43 gesetzt. Der Q-Ausgang 57 des Schalt-Flipflops 43 nimmt nunmehr H-Pegel entsprechend einen Steuerbefehl "Brems-Beginn" an. Der Steuerbefehl "Brems-Beginn" gelangt über eine Leitung 58 und das ODER-Tor 47 an den Schalt-Eingang 52 des UND-Tores 41. Das UND-Tor 41 wird eingeschaltet und die Übernahme-Taktfolge $T_ü$ wieder freigegeben. In der Akkumulator-Stufe 18 werden nun entsprechend dem eingestellten Subtraktions-Betrieb mit der Zeit abnehmende Multiplikationsfaktor $q_m$ gemäß Gleichung (5c) erzeugt und in das Speicherregister 26 übernommen. Dadurch wird eine Frequenzrampe mit abnehmender Motor-Frequenz $f_m$ gewonnen. Gleichzeitig wird auch der Zählerstand im Vorwärts/Rückwärts-Zähler 44 durch die freigegebene Übernahme-Taktfolge $T_ü$ heruntergezählt, bis der Zählerstand am Ende der Brems-Phase zum Zeitpunkt $t_e$ zu Null wird und der Vorwärts/Rückwärts-Zähler 44 an seinem Signal-Ausgang 59 einen Steuerbefehl "Brems-Ende" abgibt. Der Steuerbefehl "Brems-Ende" setzt über eine Leitung 60 das Schalt-Flipflop 43 zurück, wodurch das UND-Tor 41 wieder abgeschaltet wird. Gleichzeitig schaltet der Steuerbefehl "Brems-Ende" auch die Motor-Stufe 4 über die Leitung 16 ab.

In den meisten Anwendungsfällen wird die Frequenzrampe der Brems-Phase ein Spiegelbild der Frequenzrampe der Hochlauf-Phase sein, d. h., daß beide Frequenzrampen z. B. einen linearen Verlauf mit derselben Steigung bzw. demselben Gefälle haben, so daß Hochlauf-Phase und Brems-Phase gleich lang sind. Es liegt im Rahmen der Erfindung, für die Hochlauf- und die Brems-Phase unterschiedliche Verläufe der Frequenzrampen zu wählen. Beispielsweise können die beiden Frequenzrampen linear aber mit unterschiedlichen Steigungen verlaufen. In diesem Falle werden mit Hilfe der Codier-Schalter 29 und 30 jeweils zwei unterschiedliche Parameter "$q_{mo}$" und "$q_m$" in der Akkumulator-Stufe 18 eingegeben und entsprechend mit dem Steuerbefehl auf der Steuerleitung 31 umgeschaltet. Genau so kann aber der eine Verlauf der Frequenzrampe linear und der andere gekrümmt sein oder beide Frequenzrampen unterschiedliche Krümmungen aufweisen, wozu auch die an den Codier-Schaltern 37, 38 und 39 eingestellten Parametern in der Akkumulator-Stufe 20 mit einem über einen Schalter 61 ein- und ausschaltbaren Steuerbefehl auf der Leitung 40 umgeschaltet werden können.

**Patentansprüche**

1. Verfahren zur Ansteuerung eines Schrittmotors in den einzelnen Betriebszuständen durch eine Motortaktfolge ($T_m$) mit zeitvariabler Frequenz ($f_m$), bei dem die Frequenz der Motortaktfolge durch Division der konstanten Frequenz ($f_0$) einer Grund-Taktfolge ($T_0$) durch einen konstanten ersten Faktor $q_k$ und durch Multiplikation der konstanten Frequenz mit einem zeitvariablen zweiten Faktor $q_m$ erzeugt wird, wobei $0 \leq q_m \leq q_k$ ist, dadurch gekennzeichnet, daß
a) aus der Grund-Taktfolge ($T_0$) durch Teilung der Frequenz ($f_0$) der Grund-Taktfolge ($T_0$) durch einen Teilungsfaktor ($q_ü$) eine Übernahme-Taktfolge ($T_ü$) abgeleitet wird, und
b) der zweite Faktor ($q_m$) mit der Frequenz ($f_ü$) der Übernahme-Taktfolge ($T_ü$) jeweils zu den Taktzeitpunkten um ein vorgegebenes Increment ($\Delta q_m$) geändert wird, welches die Frequenzänderung der Motortaktfolge ($T_m$) pro Taktintervall bestimmt.
2. Verfahren nach Anspruch 1, dadurch gekennzeichnet, daß die Änderung des zweiten Faktors ($q_m$) bzw. der Frequenz ($f_m$) der Motortaktfolge ($T_m$) durch Einschalten der Übernahmetaktfolge ($T_ü$) eingeleitet und durch Ausschalten beendet wird.
3. Verfahren nach Anspruch 1 oder 2, dadurch gekennzeichnet, daß
a) ein konstanter Anteil ($q_{mo}$) des zweiten Faktors ($q_m$) vorgegeben wird, welcher die Startfrequenz ($f_{ms}$) der Motortaktfolge ($T_m$) bei Hochlaufbeginn des Schrittmotors bestimmt, und
b) der zweite Faktor ($q_m$) während des Hochlaufs durch fortgesetzte Addition der Inkremente ($q_m$) zu dem konstanten Anteil ($q_{mo}$) in den Taktzeitpunkten der Übernahmetaktfolge ($T_ü$) gemäß der Beziehung:

$$q_m = q_{mo} + n\Delta q_m$$

gebildet wird, wobei "n" die Anzahl der vom Hochlaufbeginn an ausgeführten Takte der Übernahmetaktfolge ($T_ü$) ist.
4. Verfahren nach einem der Ansprüche 1 bis 3, dadurch gekennzeichnet, daß die Änderung des zweiten Faktors ($q_m$) bei Hochlaufende unterbrochen und der dabei erreichte, die Arbeitsfrequenz des Schrittmotors bestimmende Wert des zweiten Faktors ($q_{ma}$) für die Arbeitsdauer des Schrittmotors gespeichert wird.
5. Verfahren nach einem der Ansprüche 1 bis 4, dadurch gekennzeichnet, daß der zweite Faktor ($q_m$)

während der Bremsung des Schrittmotors durch fortgesetzte Subtraktion der Inkremente ($\Delta q_m$) von dem gespeicherten Wert des zweiten Teilungsfaktors ($q_{ma}$) in den Taktzeitpunkten der Übernahmetaktfolge ($T_\ddot{u}$) gemäß der Beziehung:

$$q_m = q_{ma} - n\Delta q_m$$

gebildet wird, wobei "n" die Anzahl der vom Bremsbeginn an ausgeführten Takte der Übernahmetaktfolge ($T_\ddot{u}$) ist.

6. Verfahren nach einem der Ansprüche 1 bis 5, dadurch gekennzeichnet, daß der zweite Faktor ($q_m$) in einem Taktzeitpunkt der Übernahmetaktfolge ($T_\ddot{u}$) jeweils durch Änderung des im vorangegangenen Taktzeitpunkt gebildeten Faktors um das vorgegebene Inkrement ($\Delta q_m$) erzeugt wird.

7. Verfahren nach einem der Ansprüche 1 bis 6, dadurch gekennzeichnet, daß zur Erzeugung einer linearen Frequenzänderung der Motortaktfolge ($T_m$) ein konstanter Teilungsfaktor ($q_\ddot{u}$) bzw. eine konstante Frequenz ($f_\ddot{u}$) der Übernahmetaktfolge ($T_\ddot{u}$) vorgegeben wird.

8. Verfahren nach Anspruch 7, dadurch gekennzeichnet, daß durch den Wert des konstanten Teilungsfaktors ($q_\ddot{u}$) die Steigung der linearen Frequenzänderung der Motortaktfolge ($T_m$) eingestellt wird.

9. Verfahren nach einem der Ansprüche 1 bis 8, dadurch gekennzeichnet, daß zur Erzeugung einer nichtlinearen Frequenzänderung der Motortaktfolge ($T_m$) der Teilungsfaktor ($q_\ddot{u}$) bzw. die Frequenz ($f_\ddot{u}$) der Übernahmetaktfolge ($T_\ddot{u}$) zeitabhängig geändert wird.

10. Verfahren nach einem der Ansprüche 1 bis 9, dadurch gekennzeichnet, daß

a) der die Arbeitsfrequenz des Schrittmotors bestimmende zweite Faktor ($q_{ma}$) bei vorgegebenem Inkrement ($\Delta q_m$) als Anzahl (n) vom Hochlaufbeginn an auszuführender Takte der Übernahmetaktfolge ($T_\ddot{u}$) vorgegeben wird,

b) die Übernahmetaktfolge ($T_\ddot{u}$) bei Hochlaufbeginn eingeschaltet und die Takte in einen Zähler eingezählt werden,

c) die eingezählte Anzahl und die vorgegebene Anzahl von Takten laufend miteinander verglichen werden und

d) der bei Übereinstimmung der Taktzahl bei Hochlaufende erreichte Zählerstand fixiert und die Übernahmetaktfolge ($T_\ddot{u}$) unterbrochen wird.

11. Verfahren nach einem der Ansprüche 1 bis 10, dadurch gekennzeichnet, daß

a) die Übernahmetaktfolge ($T_\ddot{u}$) bei Bremsbeginn eingeschaltet wird,

b) der fixierte Zählerstand durch die Takte der Übernahmetaktfolge ($T_\ddot{u}$) heruntergezählt wird und

c) beim Zählerstand "Null" die Bremsung des Schrittmotors beendet wird.

12. Anordnung zur Ansteuerung eines Schrittmotors in den einzelnen Betriebszuständen, bestehend aus:

a) einem Taktgenerator (1) zur Erzeugung einer Grundtaktfolge ($T_0$)

b) einer an den Taktgenerator (1) angeschlossenen Frequenzuntersetzerstufe (2) zur Erzeugung einer Motortaktfolge ($T_m$) aus der Grundtaktfolge ($T_0$), und

c) einer mit der Frequenz-Untersetzerstufe (2) verbundenen Motor-Stufe (3; 4) zur Umsetzung der Motortaktfolge ($T_m$) in Ansteuersignale für den Schrittmotor, dadurch gekennzeichnet, daß die Frequenz-Untersetzer-Stufe (2) folgende Komponenten aufweist:

d) eine an den Taktgenerator (1) angeschlossene Haupt-Frequenzteiler-Stufe (17) zur Erzeugung der Frequenz ($f_m$) der Motortaktfolge ($T_m$) durch Multiplikation der Frequenz ($f_0$) der Grundtaktfolge ($T_0$) mit einem zeitabhängigen Faktor ($q_m$),

e) eine mit der Haupt-Frequenzteiler-Stufe (17) verbundene Akkumulator-Stufe (18) zur Bildung des zeitabhängigen Faktors ($q_m$),

f) eine an den Taktgenerator (1) angeschlossene Hilfs-Frequenzteiler-Stufe (19) zur Erzeugung einer Übernahmetaktfolge ($T_\ddot{u}$) aus der Grundtaktfolge ($T_0$) durch Teilung der Frequenz ($f_0$) der Grundtaktfolge ($T_0$) durch einen Teilungsfaktor ($q_\ddot{u}$),

g) eine an die Hilfs-Frequenzteiler-Stufe (19) angeschlossene zweite Akkumulator-Stufe (20) zur Bildung des Teilungsfaktors ($q_\ddot{u}$),

h) eine mit der Hilfs-Frequenzteiler-Stufe (19) und der Haupt-Frequenzteiler-Stufe (17) verbundene Schalt-Stufe (41) für die Übernahmetaktfolge ($T_\ddot{u}$) und

i) eine Steuer-Stufe (21) zur Bildung des Schaltsignals für die Schalt-Stufe (41).

13. Anordnung nach Anspruch 12, dadurch gekennzeichnet, daß Codier-Schalter (29; 30; 37; 38; 39) zur Vorgabe von Parametern vorgesehen sind, welche mit den Akkumulator-Stufen (18; 20) verbunden sind.

14. Anordnung nach Anspruch 12 oder 13, dadurch gekennzeichnet, daß die Haupt-Frequenzteiler-Stufe (17) ein Speicherregister (26) zur Speicherung des zeitabhängigen Faktors ($q_m$) und die Hilfs-Frequenzteiler-Stufe (19) ein Speicherregister (36) zur Speicherung des Teilungsfaktors ($q_\ddot{u}$) aufweisen.

15. Anordnung nach einem der Ansprüche 12 bis 14, dadurch gekennzeichnet, daß die Steuer-Stufe (21)

a) einen an die Schalt-Stufe (41) angeschlossenen Vorwärts/Rückwärts-Zähler (44) zur Zählung der Takte der Übernahmetaktfolge (Tü),

b) einen mit dem Vorwärts/Rückwärts-Zähler (44) verbundenen Codier-Schalter (46) zur Vorgabe einer Anzahl von Takten der Übernahmetaktfolge (Tü) und

c) einen an den Vorwärts/Rückwärts-Zähler (44) und den Codier-Schalter (46) angeschlossenen Vergleicher (45) aufweist.

**Claims**

1. Method of controlling a stepping motor in the separate operating states by means of a motor timing sequence ($T_m$) of time-variable frequency ($f_m$), in which the frequency of the motor timing sequence is generated by division of the constant frequency ($f_0$) of a fundamental timing sequence ($T_0$) by a first constant factor ($q_k$) and by multiplication of the constant frequency by a time-variable second factor $q_m$, wherein $0 \leq q_m \leq q_k$, characterised in that

a) a transfer timing sequence ($T_ü$) is derived from the fundamental timing sequence ($T_0$) by division of the frequency ($f_0$) of the fundamental timing sequence ($T_0$) by a dividing factor ($q_ü$), and

b) the second factor ($q_m$) is varied at the frequency ($f_ü$) of the transfer timing sequence ($T_ü$) respectively at the timing pulse instants by a preset increment ($\Delta q_m$) which determines the frequency variation of the motor timing sequence ($T_m$) per timing pulse interval.

2. Method according to claim 1, characterised in that the variation of the second factor ($q_m$) or of the frequency ($f_m$) of the motor timing sequence ($T_m$) is initiated by switching on of the transfer timing sequence ($T_ü$) and terminated by switching off.

3. Method according to claim 1 or 2, characterised in that

a) a constant fraction ($q_{m0}$) of the second factor ($q_m$) is preset, which determines the starting frequency ($f_{ms}$) of the motor timing sequence ($T_m$) upon starting the acceleration of the stepping motor, and

b) the second factor ($q_m$) is generated during the acceleration by continued addition of the increments ($\Delta q_m$) to the constant fraction ($q_{m0}$) at the timing pulse instants of the transfer timing sequence ($T_ü$) according to the relationship:

$$q_m = q_{m0} + n\Delta q_m,$$

wherein "n" is the number of pulses of the transfer timing sequence ($T_ü$) carried out from the beginning of the acceleration.

4. Method according to one of the claims 1 to 3, characterised in that the variation of the second factor ($q_m$) is interrupted at the end of the acceleration and that the value of the second factor ($q_{ma}$) determining the working frequency of the stepping motor, which is obtained thereby, is stored for the period of operation of the stepping motor.

5. Method according to one of the claims 1 to 4, characterised in that the second factor ($q_m$) is generated during the deceleration of the stepping motor by continued subtraction of the increments ($\Delta q_m$) from the stored value of the second dividing factor ($q_{ma}$) at the timing pulse instants of the transfer timing sequence ($T_ü$) according to the relationship:

$$q_m = q_{ma} - n\Delta q_m,$$

wherein "n" is the number of pulses of the transfer timing sequence ($T_ü$) carried out since the beginning of the deceleration.

6. Method according to one of the claims 1 to 5, characterised in that the second factor ($q_m$) is generated at a timing pulse instant of the transfer timing sequence ($T_ü$) respectively by varying the factor generated during the preceding timing pulse instant by the preset increment ($\Delta q_m$).

7. Method according to one of the claims 1 to 6, characterised in that a constant dividing factor ($q_ü$) or a constant frequency ($f_ü$) of the transfer timing sequence ($T_ü$) is preset to generate a linear frequency variation of the motor timing sequence ($T_m$).

8. Method according to claim 7, characterised in that the rise of the linear frequency variation of the motor timing sequence ($T_m$) is set by the value of the constant dividing factor ($q_ü$).

9. Method according to one of the claims 1 to 8, characterised in that the dividing factor ($q_ü$) or the frequency ($f_ü$) of the transfer timing sequence ($T_ü$) is varied as a function of time, to generate a non-linear frequency variation of the motor timing sequence ($T_m$).

10. Method according to one of the claims 1 to 9, characterised in that

a) in the case of a preset increment ($\Delta q_m$), the second factor ($q_{ma}$) determining the working frequency of the stepping motor is preset as the number (n) of pulses of the transfer timing sequence ($T_ü$) which

are to be carried out from the beginning of the acceleration,

b) the transfer timing sequence ($T_ü$) is switched on at the beginning of the acceleration and the pulses are counted in a counter, c) the number counted and the preset number of pulses are compared with each other continuously and

d) the counter reading obtained in case of correspondence of the number of pulses at the end of the acceleration is registered and the transfer timing sequence ($T_ü$) is interrupted.

11. Method according to one of the claims 1 to 10, characterised in that

a) the transfer timing sequence ($T_ü$) is switched on at the beginning of the deceleration,

b) the registered counter reading is counted down by means of the pulses of the transfer timing sequence ($T_ü$) and

c) the deceleration of the stepping motor is terminated at the counter reading "nil".

12. System for controlling a stepping motor in the separate operating states, comprising:

a) a clock generator (1) for generating a fundamental timing sequence ($T_0$),

b) a frequency reduction stage (2) connected to the clock generator (1) for generating a motor timing sequence ($T_m$) from the fundamental timing sequence ($T_0$), and

c) a motor stage (3; 4) connected to the frequency reduction stage (2) for conversion of the motor timing sequence ($T_m$) into control signals for the stepping motor, characterised in that the frequency reduction stage (2) comprises the following components:

d) a principal frequency divider stage (17) connected to the clock generator (19) to generate the frequency ($f_m$) of the motor timing sequence ($T_m$) by multiplying the frequency ($f_0$) of the fundamental timing sequence ($T_0$) by a time-dependent factor ($q_m$),

e) an accumulator stage (18) connected to the principal frequency divider stage (17) to generate the time-dependent facor ($q_m$),

f) an auxiliary frequency divider stage (19) connected to the clock generator (1) to generate a transfer timing sequence ($T_ü$) from the fundamental timing sequence ($T_0$) by dividing the frequency ($f_0$) of the fundamental timing sequence ($T_0$) by a dividing factor ($q_ü$),

g) a second accumulator stage (20) connected to the auxiliary frequency divider stage (19) to generate the dividing factor ($q_ü$),

h) a switching stage (41) connected to the auxiliary frequency divider stage (19) and the principal frequency divider stage (17) for the transfer timing sequence ($T_ü$), and

i) a control stage (21) for generating the switching signal for the switching stage (41).

13. System according to claim 12, characterised in that coding switches (29; 30; 37; 38; 39) are provided for presetting parameters, which are connected to the accumulator stages (18; 20).

14. System according to claim 12 or 13, characterised in that the principal frequency divider stage (17) comprises a storing register (26) for storage of the time-dependent factor ($q_m$) and the auxiliary frequency divider stage (19) comprises a storing register (36) for storage of the dividing factor ($q_ü$).

15. System according to one of the claims 12 to 14, characterised in that the control stage (21) has

a) a count-up/count-down counter (44) connected to the switching stage (41) for counting the pulses of the transfer timing sequence ($T_ü$),

b) a coding switch (46) which is connected to the count-up/count-down counter (44) for presetting a number of pulses of the transfer timing sequence ($T_ü$), and

c) a comparator (45) connected to the count-up/count-down counter (44) and to the coding switch (46).

## Revendications

1. Procédé de commande d'un moteur pas à pas pour les différents états de fonctionnement à l'aide d'une cadence de moteur ($T_m$) à fréquence ($f_m$) variable dans le temps, la fréquence de la cadence du moteur s'obtenant par division d'une fréquence constante ($f_0$) d'une cadence fondamentale ($T_0$) par un premier coefficient constant ($q_k$) et par multiplication de la fréquence constante par un second coefficient ($q_m$) variable dans le temps avec $0 \le q_m \le q_k$, procédé caractérisé en ce que:

a) à partir de la cadence fondamentale ($T_0$), par division de la fréquence ($f_0$) de la cadence fondamentale ($T_0$) par un coefficient de division ($q_ü$) on dérive une cadence de transfert ($T_ü$) et

b) le second coefficient ($q_m$) de fréquence ($f_ü$) de la cadence de transfert ($T_ü$) est modifié chaque fois aux instants de cadence d'un incrément prédéterminé ($\Delta q_m$) qui correspond par intervalle de cadence à la variation de fréquence de la cadence de moteur ($T_m$).

2. Procédé selon la revendication 1, caractérisé en ce que la variation du second coefficient ($q_m$) ou de la fréquence ($f_m$) de la cadence de moteur ($T_m$) est induite par la mise en œuvre de la cadence de transfert ($T_ü$) et est terminée par la coupure de cette cadence.

3. Procédé selon la revendication 1 ou 2, caractérisé en ce que:

a) une partie constante ($q_{m0}$) du second coefficient est prédéterminée, cette partie déterminant la fréquence de démarrage ($f_{ms}$) de la cadence de moteur ($T_m$) au début de la montée en vitesse du moteur pas à pas, et

b) le second coefficient ($q_m$) est formé pendant la montée en vitesse par une addition continue des incréments ($\Delta q_m$) à la partie constante ($q_{m0}$) aux instants de cadence de la cadence de transfert ($T_\ddot{u}$) selon la relation:

$$q_m = q_{m0} + n\Delta q_m,$$

"n" étant le nombre de cadences de la cadence de transfert ($T_\ddot{u}$) exécutée à partir du début de la montée en vitesse.

4. Procédé selon l'une des revendications 1 à 3, caractérisé en ce qu'on interrompt la variation du second coefficient ($q_m$) à la fin de la montée en vitesse et la valeur du second coefficient ($q_{ma}$) ainsi atteinte et qui définit la fréquence de travail du moteur pas à pas est inscrite en mémoire pendant la durée de travail du moteur pas à pas.

5. Procédé selon l'une des revendications 1 à 4, caractérisé en ce que le second coefficient ($q_m$) est formé au cours du freinage du moteur pas à pas par soustraction continue des incréments ($\Delta q_m$) à partir de la valeur inscrite en mémoire du second coefficient de division ($q_{ma}$) aux instants de cadence de la cadence de transfert ($T_\ddot{u}$) selon la relation:

$$q_m = q_{ma} - n\Delta q_m,$$

"n" étant le nombre de cadences exécutées de la cadence de transfert ($T_\ddot{u}$) à partir du début du freinage.

6. Procédé selon l'une des revendications 1 à 5, caractérisé en ce que le second coefficient ($q_m$) est généré à un instant de la cadence de transfert ($T_\ddot{u}$) correspondant respectivement à la variation du coefficient formé au moment de la cadence précédente, d'un incrément prédéterminé ($\Delta q_m$).

7. Procédé selon l'une des revendications 1 à 6, caractérisé en ce que pour former une modification de fréquence linéaire de la cadence de moteur ($T_m$) on prédétermine un coefficient de division constant ($q_\ddot{u}$) ou une fréquence constante ($f_\ddot{u}$) de la cadence de transfert ($T_\ddot{u}$).

8. Procédé selon la revendication 7, caractérisé en ce qu'on règle la pente de la variation linéaire de fréquence de la cadence de moteur ($T_m$) par la valeur du coefficient de division constant ($q_\ddot{u}$).

9. Procédé selon les revendications 1 à 8, caractérisé en ce que pour générer une variation de fréquence non linéaire de la cadence de moteur ($T_m$) on modifie le coefficient de division ($q_\ddot{u}$) ou la fréquence ($f_\ddot{u}$) de la cadence de transfert ($T_\ddot{u}$) en fonction du temps.

10. Procédé selon l'une des revendications 1 à 9, caractérisée en ce que:

a) le second coefficient ($q_{ma}$) qui détermine la fréquence de travail du moteur pas à pas est prédéterminé pour un incrément prédéterminé ($\Delta q_m$) en fonction du nombre (n) de cadences de la cadence de transfert ($T_\ddot{u}$) exécutée à compter du début de la montée en vitesse,

b) la cadence de transfert ($T_\ddot{u}$) est mise en œuvre au début de la montée de vitesse et on compte les cadences dans un compteur,

c) on compare entre le nombre compté et le nombre prédéterminé de cadences, de manière continue et

d) en cas de coincidence entre le nombre de cadences de l'état de comptage atteint à la montée en vitesse on fixe cet état et on interrompt la cadence de transfert ($T_\ddot{u}$).

11. Procédé selon l'une des revendications 1 à 10, caractérisé en ce que

a) on met en œuvre la cadence de transfert ($T_\ddot{u}$) au début du freinage,

b) on décompte l'état de comptage fixe par les cadences de la cadence de transfert ($T_\ddot{u}$),

c) lorsque l'état de comptage est égal à zéro le freinage du moteur pas à pas est terminé.

12. Circuit de commande d'un moteur pas à pas dans différents états de fonctionnement, circuit comprenant:

a) un générateur de cadence (1) pour générer une cadence fondamentale ($T_0$),

b) un étage réducteur de fréquence (2) relié au générateur de cadence (1) pour générer une cadence de moteur ($T_m$) à partir de la cadence fondamentale ($T_0$) et

c) un étage de moteur (3, 4) relié à l'étage de réduction de fréquence (2) pour convertir la cadence de moteur ($T_m$) en des signaux de commande du moteur pas à pas, circuit caractérisé en ce que l'étage de réduction de fréquence (2) comprend les éléments suivants:

d) un étage diviseur de fréquence principal (17) relié au générateur de cadence (1) pour générer la fréquence ($f_m$) de la cadence de moteur ($T_m$) par multiplication de la fréquence ($f_0$) de la cadence fondamentale ($T_0$) par un coefficient ($q_m$) dépendant du temps,

d) un étage accumulateur (18) relié à l'étage diviseur de fréquence principal (17) pour former le coefficient ($q_m$) dépendant du temps,

f) un étage diviseur de fréquence auxiliaire (19) relié au générateur de cadence (1) pour générer une cadence de transfert ($T_\ddot{u}$) à partir de la cadence fondamentale ($T_0$) par division de la fréquence ($f_0$) de la cadence fondamentale ($T_0$) par un coefficient diviseur ($q_\ddot{u}$),

g) un second étage accumulateur (20) relié à l'étage diviseur de fréquence auxiliaire (19) pour former le coefficient de division ($q_{\ddot{u}}$),

h) un étage de commutation (41) relié à l'étage diviseur de fréquence auxiliaire (19) et à l'étage diviseur de fréquence principal (17) pour la cadence de transfert ($T_{\ddot{u}}$) et

i) un étage de commande (21) pour former le signal de communication de l'étage de commutation (41).

13. Circuit selon la revendication 12, caractérisé en ce que les commutateurs de codage (29, 30, 37, 38, 39) sont reliés aux étages accumulateur (18, 20) pour prédéterminer des paramètres.

14. Circuit selon la revendication 12 ou 13, caractérisé en ce que l'étage diviseur de fréquence principal (17) comporte un registre de mémoire (26) pour mettre en mémoire le coefficient dépendant du temps ($q_m$) et l'étage diviseur de fréquence auxiliaire (19) comporte un registre de mémoire (36) pour recevoir le coefficient diviseur ($q_{\ddot{u}}$).

15. Circuit selon l'une des revendications 12 à 14, caractérisé en ce que l'étage de commande (21) comprend:

a) un compteur-décompteur (44) relié à l'étage de commutation (41) pour compter les cadences de la cadence de transfert ($T_{\ddot{u}}$),

b) un commutaueur de codage (46) relié au compteur-décompteur (44) pour prédéterminer un certain nombre de cadences de la cadence de transfert ($T_{\ddot{u}}$) et

c) un comparateur (45) relié au compteur-décompteur (44) et au commutateur de codage (46).

Fig.1

Stand der Technik

EP 0 228 475 B1

Fig.2

Fig.3

Fig.4

Fig.5a

Fig.5b

Fig.5c